# EUROPEAN PATENT APPLICATION

(11) **EP 4 428 068 A1**
(43) Date of publication of application: **11.09.2024**
(21) Application number: 24161078.1
(22) Date of filing: 04.03.2024
(51) Int. Cl.: B65G 47/08, B65G 47/26, B65G 47/32, B65G 47/84, B65G 47/29, B65G 47/88

(54) **AN APPARATUS AND METHOD FOR FORMING GROUPS OF PRODUCTS**

(30) Priority: 07.03.2023 IT 202300004143
(71) Applicant: Cavanna S.p.A., 28077 Prato Sesia (NO) (IT)
(72) Inventor: BROLLI, Mr. Elio, I-28077 Prato Sesia (Novara) (IT); BARDONE, Mr. Fausto, I-28077 Prato Sesia (Novara) (IT)
(74) Representative: Marchitelli, Mauro

(57) **Abstract**

An apparatus for forming groups of products (G), comprising:
- a product conveyor (14)
- a grouping device (16) configured to group products (P) coming from the product conveyor (14) into groups of products (G) each of which is made up of a predetermined number of products (P) placed in contact with each other, and
- a group conveyor (18) configured to advance groups of products (G) along a feed direction,
wherein the grouping device (16) comprises a first and a second grouping element (30, 32), cyclically movable in a coordinated manner with each other.

## Description

### Field of the invention

The present invention relates in general to the formation of groups of products.

The invention was developed particularly with a view to its application to the sector of automatic packaging of products, for example, food products.

The invention is applicable in particular to the packaging of groups of products in flow-pack packages.

This possible application, to which reference will be made later in this description, must not however be interpreted as limiting the scope of the invention.

### Description of the prior art

In the field of packaging food products, in particular biscuits or the like, the products to be packaged are often fed towards a packaging machine via a product conveyor along which the products are aligned with each other in an array. Often the product conveyor has a plurality of pushers moved by a chain, and each product is pushed in the direction of advancement by a respective pusher. On the product conveyor, the individual products may be spaced apart in the direction of advancement.

Often there is a need to package products into groups, each of which is made up of a plurality of products placed alongside each other.

There is, therefore, a need to form groups of products starting from an array of incoming products in which the individual products are spaced apart in the direction of advancement.

EP-A-1136400 by the same applicant describes a method for forming groups of products which envisages in a coordinated way:
- slowing down a product located in the most advanced position of a respective group, and
- accelerating a product located in the rearmost position of a respective group.

In this known solution, slowing down and accelerating are obtained through a single grouping element, which moves cyclically downstream and upstream of each group of products to slow down and accelerate the products located at the ends of the group.

A limitation of this known solution is represented by the high speeds and accelerations which the grouping element must have to move cyclically downstream and upstream of each group of products in very short times.

In the case of high-speed packaging machines, the dynamics of the grouping element causes stress both on the actuators that control the movement of the grouping element and on the products.

In particular, the high-speed impact of the grouping element against the products may pose risks of damaging the products, especially in the case of delicate food products such as biscuits, bars or the like.

### Object and summary of the invention

The object of the present invention is to provide an apparatus and a method for forming groups of products that overcome the problems of the prior art.

In particular, the object of the invention is to provide an apparatus and a method for forming groups of products which, starting from a single array of products or stacks of products, can form groups of products in contact with each other, avoiding the risk of compromising the integrity of the products.

According to the present invention, this object is achieved by an apparatus and a method for forming groups of products having the characteristics forming the subject of claims 1 and 7.

The claims form an integral part of the disclosure provided here in relation to the invention.

### Brief description of the drawings

The present invention will now be described in detail with reference to the attached drawings, given purely by way of non-limiting example, wherein:
- Figure 1 is a perspective view of an apparatus for forming groups of products according to the present invention;
- Figures 2-7 are side cross-sectional views illustrating some steps of the operating sequence of the apparatus according to the present invention; and
- Figures 8-13 are plan cross-sectional views illustrating steps of the operating sequence corresponding to those of Figures 2-7.

It will be appreciated that the accompanying drawings are schematic and that - in certain figures - some components may not be shown to assist in understanding the Figures. It will be appreciated that the various figures may also not be represented on the same scale.

### Detailed description

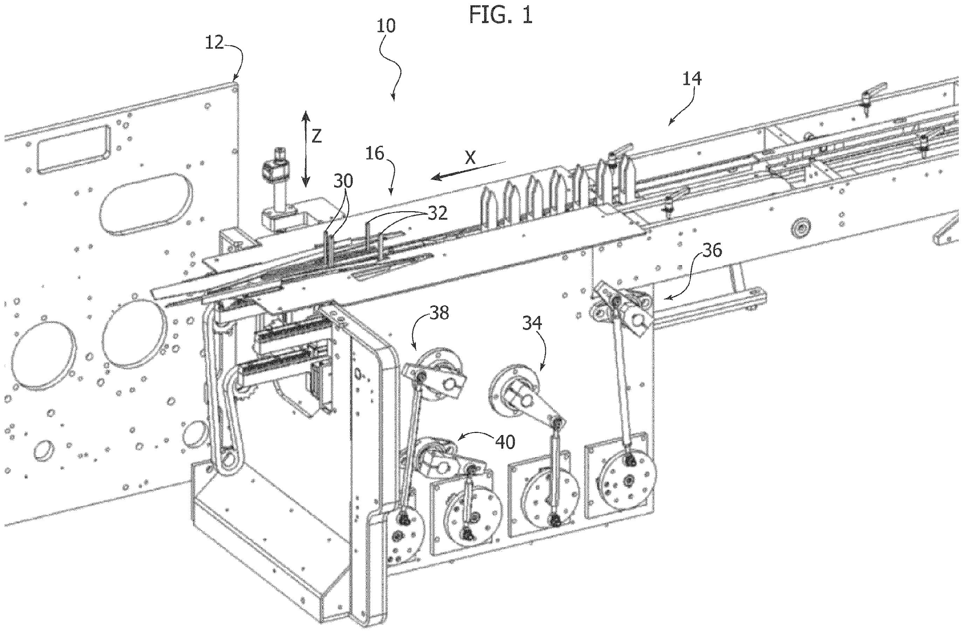

With reference to Figure 1, numeral 10 indicates an apparatus for forming groups of products to be fed to a packaging machine 12, for example, a flow-pack packaging machine, illustrated only schematically in Figure 1.

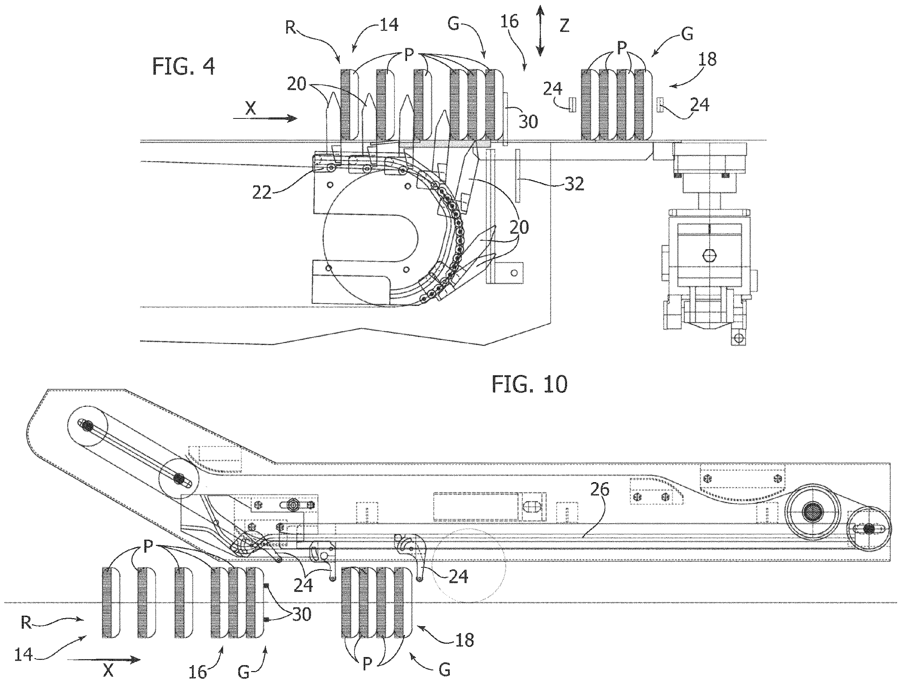

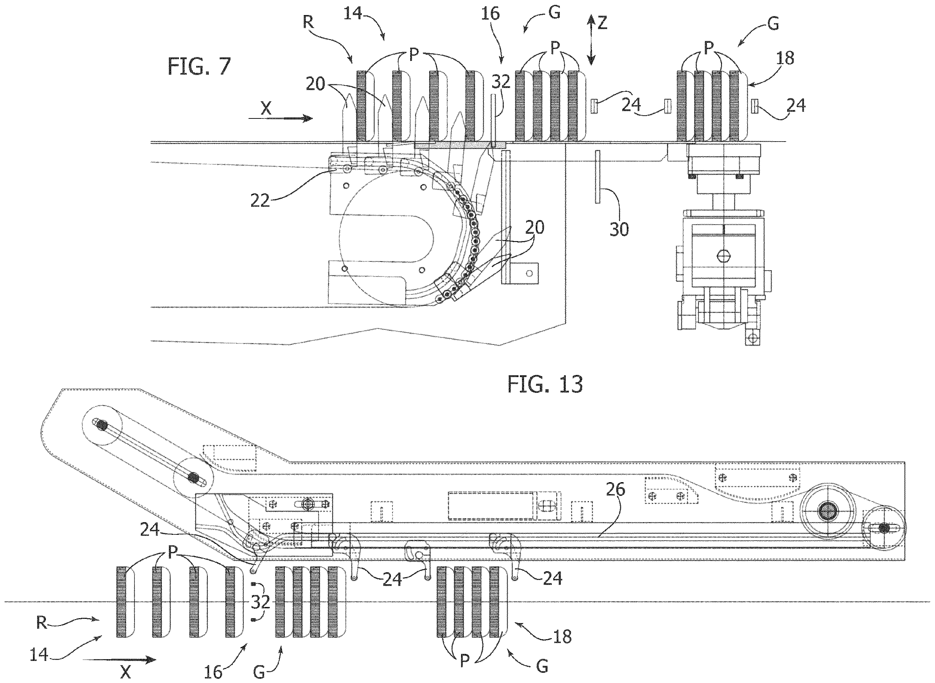

With reference to Figures 1 and 2-13, the apparatus 10 comprises a product conveyor 14, a grouping device 16 and a product group conveyor 18.

The product conveyor 14 is configured to advance an array R of products P along a transport direction X. The product conveyor 14 may comprise a plurality of pushers 20 moved by a common transmission member 22, formed for example by a chain. Each of the pushers 20 may advance a respective product P along the transport direction X. In the array R the individual products P may be spaced apart from each other in the transport direction X.

The grouping device 16 is arranged downstream of the product conveyor 14 and upstream of the group conveyor 18, and is configured to form groups of products G, each of which is made up of a plurality of products P placed in contact with each other in the transport direction X.

The group conveyor 18 is configured to feed the groups of products G to the packaging machine 12 in a feed direction, which may coincide with the transport direction X. The group conveyor 18 may comprise a plurality of pairs of transport elements 24 driven by a common transmission member 26, formed for example by a chain. The transport elements 24 of each pair are arranged downstream and upstream of each group of products G, and hold the respective group of products G during movement in the feed direction.

The grouping device 16 comprises a first and a second grouping element 30, 32, movable cyclically in a mutually coordinated manner between a first operating position in which the first grouping element 30 is located downstream of a group of products G, and the second grouping element 32 is inserted between an upstream product of the same group of products G and a downstream product P of the array R, and a second operating position in which the second grouping element 32 is located downstream of a group of products G, and the first grouping element 30 is inserted between an upstream product of the same group of products G and a downstream product P of the array R.

The reference to the downstream and upstream positions is relative to the transport direction X.

As will be better described below, in operation the first and second grouping elements 30, 32 cyclically reverse their operating positions. More specifically, in a first step, the first grouping element 30 is in contact with a downstream product of a group of products G and the second grouping element 32 is inserted between an upstream product of the same group of products G and a downstream product of a subsequent group of products G. In an immediately subsequent step, the operating positions of the first and second grouping elements 30, 32 are reversed and the second grouping element 32 is in contact with a downstream product of a group of products G and the first grouping element 30 is inserted between an upstream product of the same group of products G and a downstream product of a subsequent group of products G.

Each grouping element 30, 32 may have two or more prongs parallel to each other. In the example illustrated, each grouping element 30, 32 has the shape of a fork with two vertical prongs.

The first and second grouping elements 30, 32 may be movable with variable speeds and accelerations in the transport direction X independently from each other.

The first and second grouping elements 30, 32 may also be movable in a direction Z orthogonal to the transport direction X independently from each other.

In the example shown, the transport direction X is horizontal and the direction Z is vertical. In possible embodiments the directions X and Z could have different orientations from those illustrated in the figures.

With reference to Figure 1, the grouping device 16 may comprise a first, a second, a third and a fourth actuator device 34, 36, 38, 40. The first actuator device 34 controls the movement in the transport direction X of the first grouping element 30, the second actuator device 36 controls the movement in the transport direction X of the second grouping element 32, the third actuator device 38 controls the movement in the direction Z of the first grouping element 30, and the fourth actuator device 40 controls the movement in the direction Z of the second grouping element 32.

The first, second, third and fourth actuator devices 34, 36, 38, 40 may be equipped with respective motors independent from each other, so that the movements in the directions X and Z of each of the grouping elements 30, 32 are independent from each other.

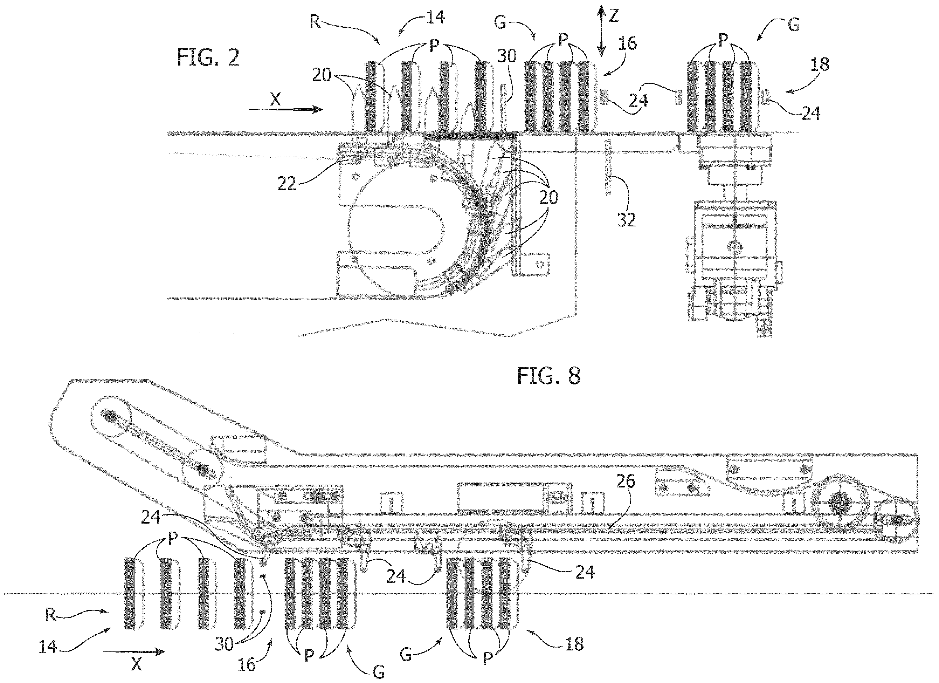

The operation of the apparatus 10 will now be described with reference to Figures 2-13.

Figures 2 and 8 show the step of the operating cycle of the apparatus 10 in which the composition of a new group of products G begins. The groups of products G already previously formed are retained between pairs of transport elements 24 of the group conveyor 18 and are fed in the feed direction towards the packaging machine.

In this step, the first grouping element 30 is inserted downstream of the downstream product P of the array of products R with a movement from bottom to top in the vertical direction Z.

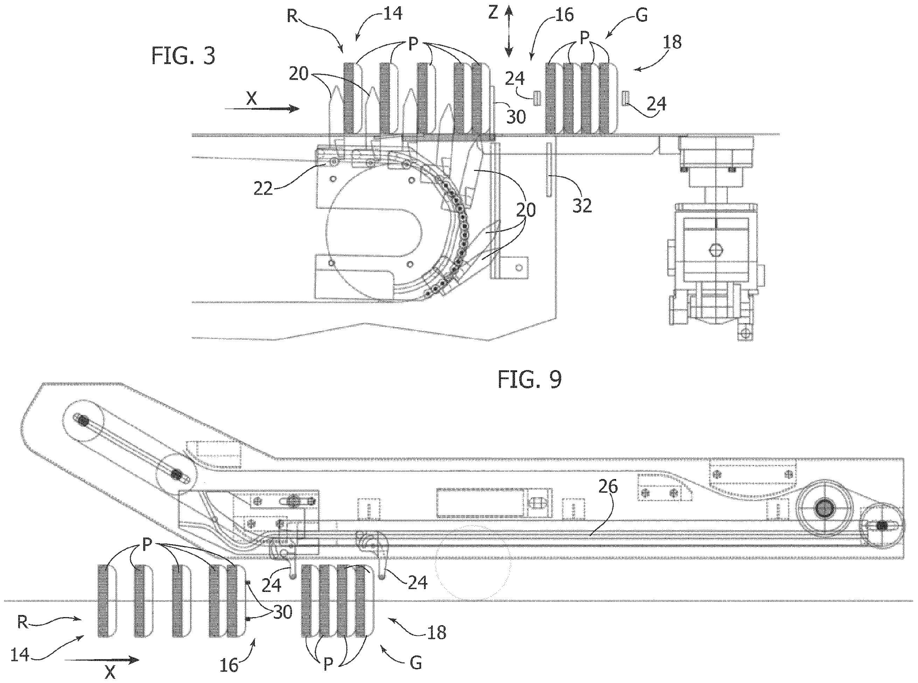

With reference to Figures 3 and 9, in a subsequent step, the first grouping element 30 moves in the transport direction X at a speed lower than the speed at which the products P of the array R advance in the transport direction X. Then, the downstream product of the array of products R contacts the first grouping element 30 and slows to the speed of the first grouping element 30. The subsequent products P come into contact with the previous products and slow down to the advancing speed of the first grouping element 30. The pusher elements 20 of the product conveyor 14 disengage from the products P with a movement from top to bottom as the products P come into contact with previous products or with the first grouping element 30. The pusher elements 20 may be inclined as illustrated in Figures 2-7 to facilitate disengagement from the products P.

Figures 3, 9 and 4, 10 show the steps wherein a new group of products G is being formed. In these steps, the second grouping element 32 is located below the support surface of the products P and moves in the opposite direction to the transport direction X of the products P.

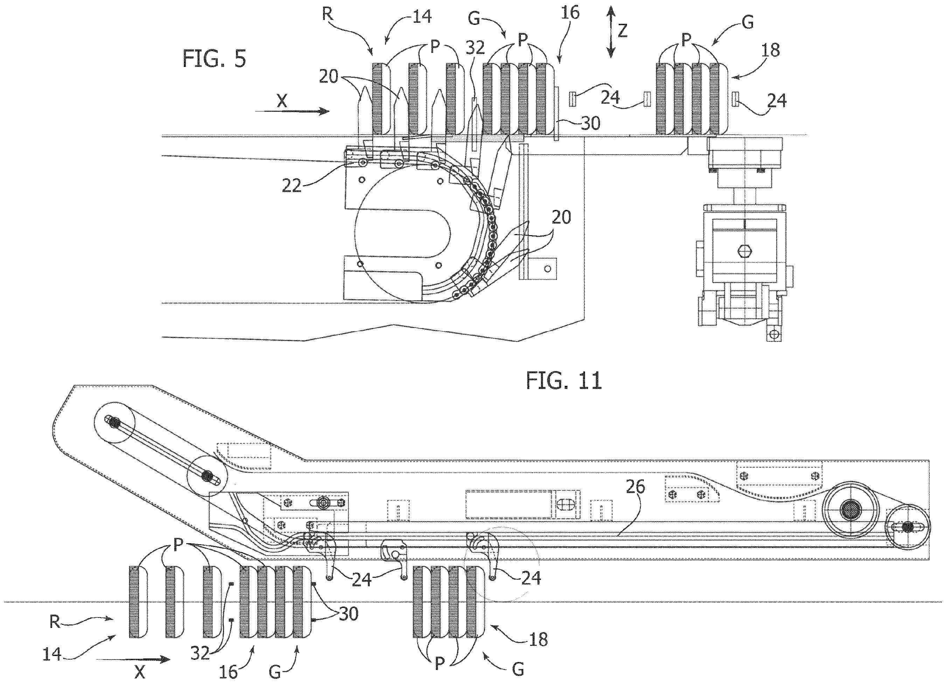

With reference to Figures 5 and 11, when the new group of products G being formed has reached the required number of products P (four products in the example illustrated in the figures), the second grouping element 32 is inserted with a movement from bottom to top in the vertical direction Z between the upstream product of the newly completed group of products G and the downstream product P of the array of products R.

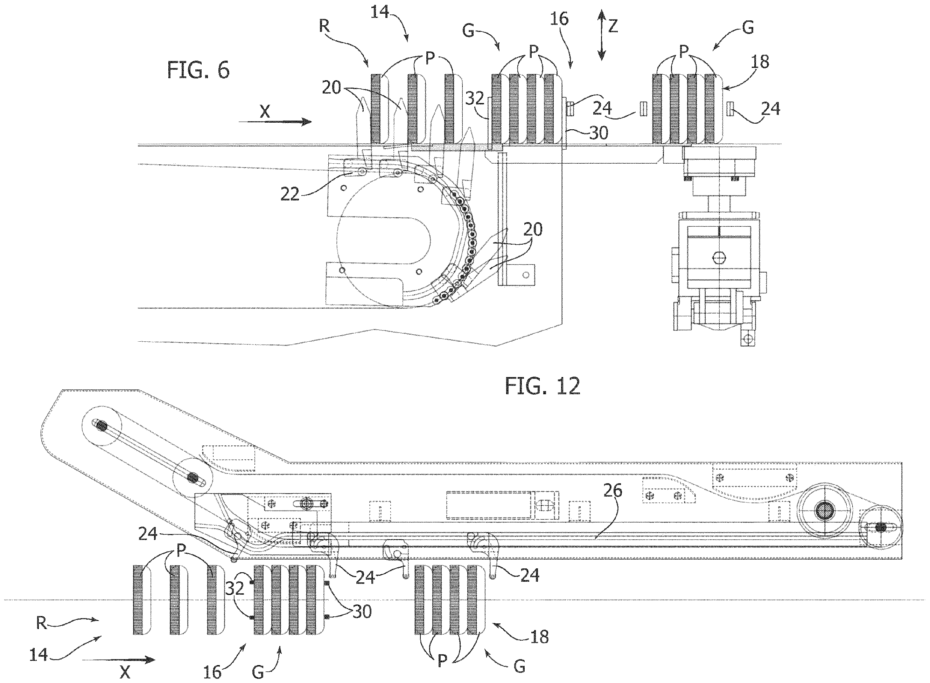

At this point, the second grouping element 32 moves in the transport direction X with a speed greater than that of the first grouping element 30 so as to compact the group of products G just completed between the first and the second grouping element 32 as illustrated in Figures 6 and 12.

Then, the downstream product of the newly completed group of products G comes into contact with one of the transport elements 24 of the group conveyor 18 and the first grouping element 30 disengages from the group of products G with a movement from top to bottom and goes below the support surface of the products P.

Then, a subsequent transport element 24 of the group conveyor 18 comes into contact with the upstream product of the newly completed group of products G.

When the newly completed group of products G is held between a pair of transport elements 24 of the group conveyor 18, the second grouping element 32 slows down and the downstream product of the array R comes into contact with the second grouping element 32 to begin the formation of a new group of products G. In the meantime, the first grouping element is located below the support surface of the products P and moves in the opposite direction to the transport direction X of the products.

When the new group of products G being formed has reached the required number of products P, the first grouping element 32 is inserted with a movement from bottom to top in the vertical direction Z between the upstream product of the group of products G just completed and the downstream product P of the array of products R to start a new cycle.

This cyclic inversion of the operating positions of the first and second grouping elements 30, 32 avoids high-speed impacts between the grouping elements 30, 32 and the products P, and avoids risks of damaging the products even when the products advance at very high speeds and in the case of fragile products.

Of course, without prejudice to the principle of the invention, the details of construction and the embodiments can be widely varied with respect to those described and illustrated, without thereby departing from the scope of the invention as defined by the claims that follow.

## Claims

1. An apparatus for forming groups of products (G), comprising:
- a product conveyor (14) configured to advance an array (R) of products (P) along a transport direction (X),
- a grouping device (16) arranged downstream of the product conveyor (12) and configured to group products (P) coming from the product conveyor (14) into groups of products (G) each of which is formed by a predetermined number of products (P) placed in contact with each other, and
- a group conveyor (18) located downstream of the grouping device (16) and configured to advance groups of products (G) along a feed direction,
**characterized in that** the grouping device (16) comprises a first and a second grouping element (30, 32), movable cyclically in a mutually coordinated manner between a first operating position in which the first grouping element (30) is located downstream of a group of products (G) and the second grouping element (32) is inserted between an upstream product of the same group of products (G) and a downstream product (P) of the array (R), and a second operating position in which the second grouping element (32) is located downstream of a group of products (G) and the first grouping element (30) is inserted between an upstream product of the same group of products (G) and a downstream product (P) of the array (R).

2. The apparatus of claim 1, wherein said first and second grouping elements (30, 32) are movable in said transport direction (X) with mutually independent speeds and accelerations.

3. The apparatus of claim 2, wherein each of said first and second grouping elements (30, 32) is movable in a direction (Z) orthogonal to the transport direction (X) independently of the other grouping element (30, 32).

4. The apparatus of claim 3, wherein each of said first and second grouping elements (30, 32) is associated with two independent actuator devices (34, 38; 36, 40) which control movement in said transport direction (X) and in said direction (Z) orthogonal to the transport direction (X).

5. The apparatus of any of the preceding claims, wherein the product conveyor (14) comprises a plurality of pushers (20) moved by a common transmission member (22), wherein each of said pushers (20) is configured for feeding a respective product (P) along the transport direction (X).

6. The apparatus of any of the preceding claims, wherein the group conveyor (18) comprises a plurality of pairs of transport elements (24) movable along a feed direction, wherein the transport elements (24) of each pair are configured to be arranged downstream and upstream of a respective group of products (G).

7. A method for forming groups of products, comprising:
- advancing an array (R) of products (P) along a transport direction (X) in a product conveyor (14),
- grouping products (P) coming from the product conveyor (14) into groups of products (G) each of which is formed by a predetermined number of products (P) placed in contact with each other, and
- feeding said groups of products (G) along a feed direction,
wherein said step of grouping products (P) into groups of products (G) comprises cyclically moving in a mutually coordinated way a first and a second grouping element (30, 32) between a first operating position in which the first grouping element (30) is located downstream of a group of products (G) and the second grouping element (32) is inserted between an upstream product of the same group of products (G) and a downstream product (P) of the array (R), and a second operating position in which the second grouping element (32) is located downstream of a group of products (G) and the first grouping element (30) is inserted between an upstream product of the same group of products (G) and a downstream product (P) of the array (R).

8. The method of claim 7, wherein said first and second grouping elements (30, 32) are movable in said transport direction (X) with mutually independent speeds and accelerations.

9. The method of claim 7 or claim 8, wherein each of said first and second grouping elements (30, 32) is movable in a direction (Z) orthogonal to the transport direction (X) independently of the other grouping element (30, 32).

10. The method according to claim 9, wherein each of said first and second grouping elements (30, 32) is associated with two mutually independent actuator devices (34, 38; 36, 40) which command the movement in said transport direction (X) and in said direction (Z) orthogonal to the transport direction (X).
